# EUROPEAN PATENT SPECIFICATION

(11) **EP 3 259 316 B1**
(45) Date of publication and mention of the grant of the patent: **05.06.2019**
(21) Application number: 16708858.2
(22) Date of filing: 19.02.2016
(51) Int. Cl.: C08L 25/12, C08L 55/02, C08K 3/34

(54) **HIGH MODULUS HIGH FLOW TALC-FILLED ACRYLONITRILE BUTADIENE STYRENE WITH ENHANCED SURFACE AESTHETICS**
HOCHMODULIGES TALKGEFÜLLTES ACRYLNITRIL-BUTADIEN-STYROL MIT HOHEM DURCHFLUSS MIT VERBESSERTER OBERFLÄCHENÄSTHETIK
ACRYLONITRILE-BUTADIÈNE-STYRÈNE REMPLI DE TALC À DÉBIT ÉLEVÉ ET MODULE ÉLEVÉ PRÉSENTANT UNE ESTHÉTIQUE DE SURFACE AMÉLIORÉE

(30) Priority: 20.02.2015 US 201562118588 P
(43) Date of publication of application: 27.12.2017
(73) Proprietor: SABIC Global Technologies B.V., 4612 PX Bergen op Zoom (NL)
(72) Inventor: MA, Shuailei, Evansville, IN 47712 (US); HOWIE, Douglas, W., Parkersburg, WV 23101 (US); KULKARNI, Amit, S., Avon Lake, OH 44012 (US); TAYLOR, Stephen, L., Ottawa, IL 61350 (US)
(74) Representative: Elzaburu S.L.P.
(86) International application number: PCT/US2016/018645
(87) International publication number: WO 2016/134240

(56) References cited:
- WO-A1-2012/106392
- WO-A1-2014/041527

## Description

### TECHNICAL FIELD

The present disclosure relates to the field of polymeric materials.

### BACKGROUND

Many high-performance applications (e.g., automotive applications), it is desirable to use materials that exhibit favorable mechanical properties as well as favorable aesthetic and thermal properties. Accordingly, there is a long-felt need in the art for materials having these characteristics.

International Patent Application WO 2012/106392 describes a method of improving surface splay resistance comprising combining a polycarbonate polymer, inorganic filler, and a grafted butadiene rubber such as acrylonitrile butadiene styrene (ABS).

### SUMMARY

In meeting these long-felt needs, the present disclosure first provides compositions, comprising: (a) from about 50 to about 65 wt% (weight percent) or from about 40-60 wt% of styrene-acrylonitrile (SAN) copolymer; (b) from about 3 to about 33 wt% of styrene-acrylonitrile - acrylonitrile-butadiene-styrene (SAN-ABS) graft copolymer; (c) from about 2 to about 30 wt% talc; and (d) one or more modifiers, wherein a wt% is calculated on the basis of the total weight of (a), (b), (c), and (d), and wherein the combined weight percent value of all components does not exceed 100 wt%.

The present disclosure also provides articles that comprise the compositions presented herein.

The present disclosure also provides methods of forming compositions.

### BRIEF DESCRIPTION OF THE DRAWINGS

The summary, as well as the following detailed description, is further understood when read in conjunction with the appended drawings. For the purpose of illustrating the invention, there are shown in the drawings exemplary embodiments of the invention; however, the invention is not limited to the specific methods, compositions, and devices disclosed. In addition, the drawings are not necessarily drawn to scale. In the drawings:
FIG. 1 presents an illustrative chart showing the benefit of high modulus high flow ABS, as compared to exemplary unfilled ABS, HMD PC/ABS and HMD PC/PBT; and
FIG. 2 provides an exemplary chart of performance of the disclosed high-modulus ABS materials in certain applications as compared to other alternative materials.

### DETAILED DESCRIPTION OF ILLUSTRATIVE EMBODIMENTS

The present invention can be understood more readily by reference to the following detailed description taken in connection with the accompanying figures and examples, which form a part of this disclosure. It is to be understood that this invention is not limited to the specific devices, methods, applications, conditions or parameters described and/or shown herein, and that the terminology used herein is for the purpose of describing particular embodiments by way of example only and is not intended to be limiting of the claimed invention. The term "plurality", as used herein, means more than one. When a range of values is expressed, another embodiment includes from the one particular value and/or to the other particular value. Similarly, when values are expressed as approximations, by use of the antecedent "about," it will be understood that the particular value forms another embodiment. All ranges are inclusive and combinable. Unless specified to the contrary herein, all test standards are the most recent standard in effect at the time of filing this application. Except where noted, it should be understood that the combined weight percent value of all components does not exceed about 100 wt. %, and all weight percent values are based on the total weight of the composition.

It is to be appreciated that certain features of the invention which are, for clarity, described herein in the context of separate embodiments, can also be provided in combination in a single embodiment. Conversely, various features of the invention that are, for brevity, described in the context of a single embodiment, can also be provided separately or in any subcombination. Further, reference to values stated in ranges includes each and every value within that range.

It is also to be understood that the terminology used herein is for the purpose of describing particular aspects only and is not intended to be limiting. As used in the specification and in the claims, the term "comprising" may include the embodiments "consisting of' and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a virgin polycarbonate" includes mixtures of two or more virgin polycarbonates. Furthermore, for example, reference to a filler includes mixtures of fillers.

Ranges can be expressed herein as from one particular value, and/or to another particular value. When such a range is expressed, another aspect includes from the one particular value and/or to the other particular value. For example, a range of "1 to 10" includes all intermediate values, e.g., 3, 5.56, and 7.3. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the value designated some other value approximately or about the same. It is generally understood, as used herein, that it is the nominal value indicated +/- 10% a variation unless otherwise indicated or inferred. For example, "about 10" encompasses the range from 9 to 11, including 10. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

The terms "first," "second," "first part," "second part," and the like, where used herein, do not denote any order, quantity, or importance, and are used to distinguish one element from another, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term "effective amount" refers to an amount that is sufficient to achieve the desired modification of a physical property of the composition or material. For example, an "effective amount" of a recycled polycarbonate blend refers to an amount that is sufficient to achieve the desired improvement in the property modulated by the formulation component, e.g. splaying, under applicable test conditions and without adversely affecting other specified properties. The specific level in terms of wt % in a composition required as an effective amount will depend upon a variety of factors including the amount and type of recycled polycarbonate blend, amount and type of virgin polycarbonate polymer compositions, amount and type of impact modifier compositions, including virgin and recycled impact modifiers, and end use of the article made using the composition.

Disclosed are the components useful in preparing the compositions of the invention as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary.

For example, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent ("wt %") of a component, unless specifically stated to the contrary, is based on the total weight of the formulation or composition in which the component is included. For example if a particular element or component in a composition or article is said to have 8% by weight, it is understood that this percentage is relative to a total compositional percentage of 100% by weight.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, --CHO is attached through carbon of the carbonyl group. Unless defined otherwise, technical and scientific terms used herein have the same meaning as is commonly understood by one of skill in the art to which this invention belongs.

The term "alkyl group" as used herein is a branched or unbranched saturated hydrocarbon group of 1 to 24 carbon atoms, such as methyl, ethyl, n propyl, isopropyl, n butyl, isobutyl, t butyl, pentyl, hexyl, heptyl, octyl, decyl, tetradecyl, hexadecyl, eicosyl, tetracosyl and the like. A "lower alkyl" group is an alkyl group containing from one to six carbon atoms.

The term "aryl group" as used herein is any carbon-based aromatic group including, but not limited to, benzene, naphthalene, etc. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "aralkyl" as used herein is an aryl group having an alkyl, alkynyl, or alkenyl group as defined above attached to the aromatic group. An example of an aralkyl group is a benzyl group.

The term "carbonate group" as used herein is represented by the formula OC(O)OR, where R can be hydrogen, an alkyl, alkenyl, alkynyl, aryl, aralkyl, cycloalkyl, halogenated alkyl, or heterocycloalkyl group described above.

The term "organic residue" defines a carbon containing residue, i.e., a residue comprising at least one carbon atom, and includes but is not limited to the carbon-containing groups, residues, or radicals defined hereinabove. Organic residues can contain various heteroatoms, or be bonded to another molecule through a heteroatom, including oxygen, nitrogen, sulfur, phosphorus, or the like. Examples of organic residues include but are not limited alkyl or substituted alkyls, alkoxy or substituted alkoxy, mono or di-substituted amino, amide groups, etc. Organic residues can preferably comprise 1 to 18 carbon atoms, 1 to 15, carbon atoms, 1 to 12 carbon atoms, 1 to 8 carbon atoms, 1 to 6 carbon atoms, or 1 to 4 carbon atoms. In a further aspect, an organic residue can comprise 2 to 18 carbon atoms, 2 to 15, carbon atoms, 2 to 12 carbon atoms, 2 to 8 carbon atoms, 2 to 4 carbon atoms, or 2 to 4 carbon atoms.

Acrylonitrile-butadiene-styrene (ABS) polymers are derived from acrylonitrile, butadiene, and styrene monomers. ABS materials exhibit excellent impact resistance and toughness. In particular, ABS materials combine the strength and rigidity of acrylonitrile and styrene polymers with the toughness of polybutadiene rubber. However, when compared to blends of polycarbonate and ABS, neat acrylonitrile-butadiene-styrene is used for applications with less stringent mechanical (e.g., tensile, flexural, heat, and fatigue) requirements.

Styrene acrylonitrile resin (SAN) is a copolymer plastic comprising styrene and acrylonitrile. The polymer chains comprise alternating repeat units of styrene and acrylonitrile.

Polycarbonates (PC) are synthetic thermoplastic resins derived from bisphenols and phosgenes, or their derivatives. They are linear polyesters of carbonic acid and can be formed from dihydroxy compounds and carbonate diesters, or by ester interchange. Polymerization may be in aqueous, interfacial, or in nonaqueous solution. Polycarbonates are a useful class of polymers known for optical clarity and enhanced impact strength, high heat resistance, and relative ductility at room temperature or below.

Blends of polycarbonates with ABS (PC/ABS) are amorphous thermoplastic blends that exhibit many desired properties, combining the advantages and/or characteristics of both polycarbonate and ABS. For example, ABS can be incorporated into a polycarbonate blend as an impact modifier, resulting in a PC/ABS blend having high stiffness and impact balance, while maintaining adequate flow for filling out tools with complex geometries. These blends are also known to have a good heat resistance, good processability, weather and ozone resistance, good ductility, electrical resistance, aesthetic characteristics, etc.

These polycarbonate blend compositions are used in various applications, including, but not limited to, in the manufacture of parts for the automotive sector, such as, manufacturing of spoilers, IP-retainers, interior-trim pieces, as well as in furniture applications, where good dimensional stability provides design freedom in complex part assembly.

Some polycarbonate blend compositions (PC/ABS blends) can, however, lead to the appearance of the undesired splaying (surface patterns) originating near the gate ends of injection-molded parts. At times the splaying can be so severe that the defects are visible even through a top-coat of paint. As a result, a large amount of molded parts may be rejected. While measures have been put in place to reduce splaying, such strategies have shown only limited success and further add significantly to the processing cost and time. Various efforts to address these shortcomings are set forth in U.S. patents 5,962,587, 7,557,154, 5,162,419, 7,557,154, and 5,962,587, as well as US2014/0200302.

The present disclosure presents, inter alia, high flow talc-filled ABS materials that also exhibit excellent surface aesthetics (high gloss and reduced surface defects like surface splay) when compared to polycarbonate (PC)-ABS blends or polycarbonate polyester blends.

In one aspect, the present disclosure provides compositions. These compositions suitably comprise (a) from about 40 to about 65 wt% (e.g., from about 50-60 wt%) of styrene-acrylonitrile (SAN) copolymer; (b) from about 3 to about 33 wt% (*e.g.,* from about 23 to about 27 wt%) of styrene-acrylonitrile - acrylonitrile-butadiene-styrene (SAN-ABS) graft copolymer; (c) from about 2 to about 30 wt% talc; and (d) one or more modifiers, wherein a wt% is calculated on the basis of the total weight of (a), (b), (c), and (d), and wherein the combined weight percent value of all components does not exceed 100 wt%.

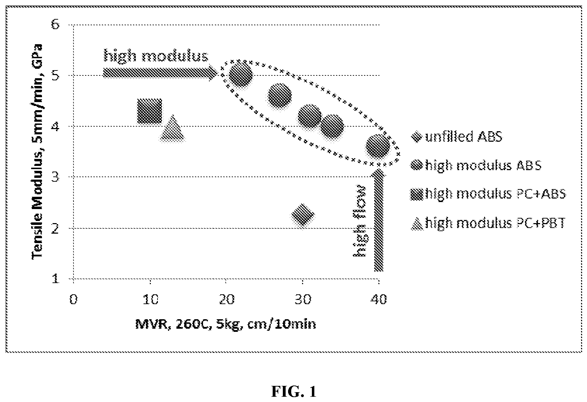

By comparison with traditional unfilled ABS, the disclosed talc-filled ABS can increase tensile modulus from ∼2GPa to ∼6GPa with a coefficient of linear thermal expansion (CLTE) as low as ∼33×10⁻⁶ 1/°C. HDT (heat deflection temperature) has also increased by up to 5°C. In addition, ABS has better hydro-stability than do polycarbonate blends. As shown in FIG. 1, high modulus talc-filled ABS blends feature various advantages over typical unfilled ABS, high modulus PC/ABS blends and high modulus PC/polyester blends in terms of flow and tensile modulus. For example, the disclosed compositions (shown with circular data markers) exhibit comparatively (and unexpectedly) high modulus and high flow as compared to unfilled ABS, PC-ABS blends, and PC-PBT blends. As one example, the disclosed compositions exhibit a tensile modulus that is about two times that of unfilled ABS. When compared to PC-ABS and PC-PBT having similar tensile modulus values, the disclosed compositions exhibit higher flow.

As presented in this disclosure, various talc loadings are shown so as to demonstrate ABS with high stiffness, and a variety of impact modifiers (HRG, VHRG, MBS - see Table 1 attached hereto) are also compared. In addition, this disclosure investigates the effects of AMSAN, TSAN and talc surface treatments (e.g., sodium alkane sulphonate).

Table 1 lists the individual building block selected for the formulation. Table 2 provides the formulations of the illustrative compositions. The butadiene/SAN ratio is constant for all the formulas.

Table 3 provides a comparison of certain selected mechanical and thermal properties for those formulas. By comparison with unfilled ABS (formula A), incorporation of talc decreases flow. But tensile modulus has been significantly increased and the linear expansion has been greatly reduced. Further, talc allows one to improve the thermal properties (HDT and Vicat softening point) of ABS. Among those with 15% talc loading, the melt volume rates of the blends containing SAS (formula E5) and HRG (formula E8) are the highest, indicating the benefit of SAS and ABS to achieve higher flow.

The blends containing TSAN (formula E6) and AMSAN (formula E7) exhibited the slowest flow, suggesting (without being bound to any particular theory) that TSAN and AMSAN are, in at least some cases, flow inhibitors. The addition of MBS (formula E4) slightly decreases the flow. The CLTE of all blends with talc are low, as low as 48×10⁻⁶ 1/°C for 20% talc loading. Use of high heat AMSAN can alter the HDT and Vicat softening point by ∼10°C. In addition, the tensile modulus of the blends using talc is improved y ∼4GPa for 15% talc loading and by ∼4.5GPa for 20% talc loading.

Because SAS and ABS promote flow, they were used in further studies with various talc and SAS loadings. To achieve even higher flow, high flow 581SAN was adopted to replace SAN. Table 4 lists the loading levels for each building block material, again keeping the butadiene/SAN ratio constant for all formulas.

Table 5 lists certain properties of the disclosed blends. When one increases talc loading from 0% to 30%, tensile modulus increases from ∼2GPa to ∼6GPa and CLTE decreases accordingly. HDT increases by ∼ 12°C. Flow, notched IZOD impact and surface gloss all decrease. Color (L*), however, is not significantly affected by talc loading.

Samples containing e.g., up to 30% talc achieve enhanced aesthetics (e.g., free of splay) and exhibits attractive surface gloss and other appearance characteristics.

Based on the experiments as shown in Tables 4 and 5 (appended hereto), several optimized formulations were identified as listed in Table 6. Selected properties are shown in Table 7, in comparison with unfilled ABS (formula B) and a PC + ABS blend (formula C). Although the impact is relatively low, talc-filled ABS shows improved tensile modulus and thermal performance when compared with unfilled ABS. At the same 15% talc loading, ABS shows almost four times the flow, and slightly lower tensile modulus, compared with PC/ABS blend. A 20% talc-filled ABS may achieve an equivalently high modulus as PC/ABS blend with 15% talc, with three times the flow.

Also - and significantly - talc-filled ABS having higher flow demonstrates excellent surface aesthetics, and is free of any surface splay as compared with PC/ABS blend. As an example, a 15% talc-filled ABS exhibits attractive surface gloss and is free of splay. By comparison, an exemplary 15% talc PC-ABS blend exhibits splay and other unattractive surface characteristics.

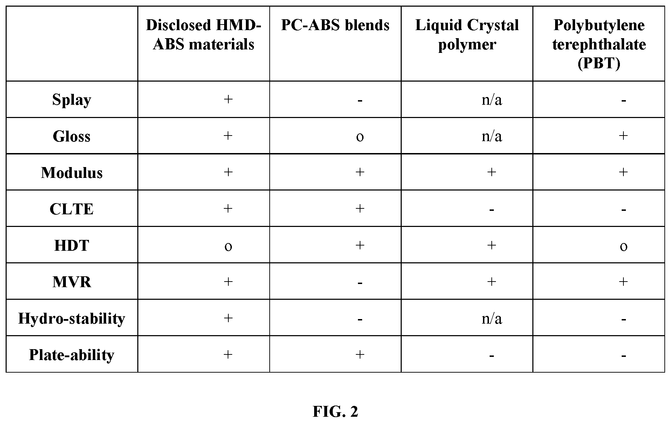

FIG. 2 provides a further comparison between the disclosed compositions and other alternatives. As shown in FIG. 2, the disclosed compositions exhibit superior properties (shown by a + marker) in splay, gloss, modulus, CLTE, MVR, hydro-stability, and plate-ability. The HDT of the disclosed materials is comparable (shown by a o marker) to PBT and other industry standards. When compared to the disclosed materials, existing alternatives exhibit inferior characteristics (shown by a - marker). For example, the disclosed materials exhibit superior splay characteristics (+) when compared to PC-ABS blends, which blends exhibit comparatively poor (shown by a - marker) splay characteristics. As shown by the chart, the disclosed compositions exhibit superior characteristics to existing alternatives.

Suitable resins for the disclosed compositions include thermosets and thermoplastics, including amorphous and crystalline thermoplastics resins. In some embodiments, crystalline polymeric resins are preferred. In some embodiments, amorphous thermoplastics, such as polycarbonate, are useful when compared to crystalline polymers on account of improved dimensional stability.

In one aspect, the thermoplastic polymer used in the compositions of the invention is an organic polymer. In this aspect, the organic polymer is selected from a wide variety of thermoplastic resins or blends of thermoplastic resins. The thermoplastic polymer also includes blends of one or more thermoplastic resins with one or more thermosetting resins. The thermoplastic polymer can also be a blend of polymers, copolymers, terpolymers, or combinations including at least one of the foregoing organic polymers. In one aspect, examples of the organic polymer are polyethylene (PE), including high-density polyethylene (HDPE), linear low-density polyethylene (LLDPE), low-density polyethylene (LDPE), mid-density polyethylene (MDPE), glycidyl methacrylate modified polyethylene, maleic anhydride functionalized polyethylene, maleic anhydride functionalized elastomeric ethylene copolymers (like EXXELOR VA1801™ and VA1803™ from ExxonMobil), ethylene-butene copolymers, ethylene-octene copolymers, ethylene-acrylate copolymers, such as ethylene-methyl acrylate, ethylene-ethyl acrylate, and ethylene butyl acrylate copolymers, glycidyl methacrylate functionalized ethylene-acrylate terpolymers, anhydride functionalized ethylene-acrylate polymers, anhydride functionalized ethylene-octene and anhydride functionalized ethylene-butene copolymers, polypropylene (PP), maleic anhydride functionalized polypropylene, glycidyl methacrylate modified polypropylene, polyacetals, polyacrylics, polycarbonates, polystyrenes, polyesters, polyamides, polyamideimides, polyarylates, polyarylsulfones, polyethersulfones, polyphenylene sulfides, polyvinyl chlorides, polysulfones, polyimides, polyetherimides, polytetrafluoroethylenes, polyetherketones, polyether etherketones, polyether ketone ketones, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polyurethanes, or the like, or a combination including at least one of the foregoing polymers.

Specific non-limiting examples of blends of thermoplastic resins include acrylonitrile-butadiene-styrene/nylon, polycarbonate/acrylonitrile-butadiene-styrene, polyphenylene ether/polystyrene, polyphenylene ether/polyamide, polycarbonate/polyester, polyphenylene ether/polyolefin, and combinations including at least one of the foregoing blends of thermoplastic resins.

In one embodiment, an organic polymer is a polyarylene ether. The term poly(arylene ether)polymer includes polyphenylene ether (PPE) and poly(arylene ether)copolymers; graft copolymers; poly(arylene ether)ionomers; and block copolymers of alkenyl aromatic compounds with poly(arylene ether)s, vinyl aromatic compounds, and poly(arylene ether), and the like; and combinations including at least one of the foregoing.

The poly(arylene ether) may have a number average molecular weight of about 3,000 to about 30,000 g/mole and a weight average molecular weight of about 30,000 to about 60,000 g/mole, as determined by gel permeation chromatography. The poly(arylene ether) can have an intrinsic viscosity of about 0.10 to about 0.60 deciliters per gram (dl/g), as measured in chloroform at 25.degree. C. It is also possible to utilize a high intrinsic viscosity poly(arylene ether) and a low intrinsic viscosity poly(arylene ether) in combination. In another embodiment, the polymer is a polycarbonate. Polycarbonates including aromatic carbonate chain units include compositions having structural units of the formula (II): 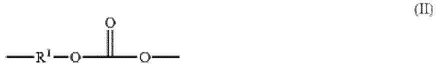 in which the R¹ groups are aromatic, aliphatic or alicyclic radicals. Preferably, R¹ is an aromatic organic radical and, more preferably, a radical of the formula (III):

-A1-Y1-A2- (III)

wherein each of A1 and A2 is a monocyclic divalent aryl radical and Y1 is a bridging radical having zero, one, or two atoms which separate A1 from A2. In an exemplary embodiment, one or more atoms separate A1 from A2. Illustrative examples of radicals of this type are --O--, --S--, --S(O)--, --S(O₂)--, --C(O)--, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A1 from A2, with an illustrative example being bisphenol. The bridging radical Y1 can be a hydrocarbon group or a saturated hydrocarbon group such as methylene, cyclohexylidene or isopropylidene.

Polycarbonates can be produced by the interfacial reaction polymer precursors such as dihydroxy compounds in which only one atom separates A1 and A2. As used herein, the term "dihydroxy compound" includes, for example, bisphenol compounds having general formula (IV) as follows: 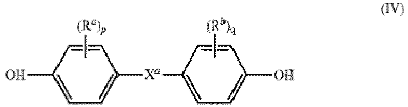 wherein R^{a} and R^{b} each independently represent hydrogen, a halogen atom, or a monovalent hydrocarbon group; p and q are each independently integers from 0 to 4; and X.sup.a represents one of the groups of formula (V): 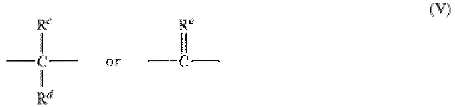 wherein R^{e} and R^{d} each independently represent a hydrogen atom or a monovalent linear or cyclic hydrocarbon group, and R^{e} is a divalent hydrocarbon group.

Examples of the types of bisphenol compounds that can be represented by formula (IV) include the bis(hydroxyaryl)alkane series. Other bisphenol compounds that can be represented by formula (IV) include those where X is --O--, --S--, --SO-- or -SO₂--. Other bisphenol compounds that can be utilized in the polycondensation of polycarbonate are represented by the formula (VI) 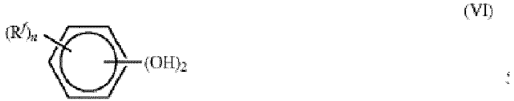 wherein, R^{f}, is a halogen atom of a hydrocarbon group having 1 to 10 carbon atoms or a halogen substituted hydrocarbon group; n is a value from 0 to 4. When n is at least 2, R^{f} can be the same or different. Examples of bisphenol compounds that can be represented by the formula (V), are resorcinol, substituted resorcinol compounds such as 3-methyl resorcin, and the like.

Bisphenol (e.g., bisphenol A) compounds such as 2,2,2',2'-tetrahydro-3,3,3',3'-tetramethyl-1,1'-spirobi-[IH-indene]-6,6'-- diol represented by the following formula (VII) can also be used.

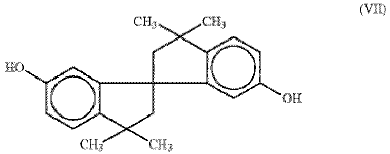

Branched polycarbonates, as well as blends of linear polycarbonate and a branched polycarbonate can also be used in the composition. Branched polycarbonates can be prepared by adding a branching agent during polymerization. These branching agents can include polyfunctional organic compounds containing at least three functional groups, which can be hydroxyl, carboxyl, carboxylic anhydride, haloformyl, and combinations including at least one of the foregoing branching agents. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl).alpha.,.alpha.-dimethyl benzyl)phenol), 4-chloroformyl phthalic anhydride, trimesic acid, benzophenone tetracarboxylic acid, or the like, or combinations thereof. The branching agents can be added at a level of about 0.05 to about 2.0 weight percent (wt %), based upon the total weight of the polycarbonate in a given layer.

In one embodiment, the polycarbonate can be produced by a melt polycondensation reaction between a dihydroxy compound and a carbonic acid diester. Preferably, the number average molecular weight of the polycarbonate is about 3,000 to about 1,000,000 grams/mole (g/mole). Within this range, it is desirable to have a number average molecular weight of greater than or equal to about 10,000, preferably greater than or equal to about 20,000, and more preferably greater than or equal to about 25,000 g/mole. Also desirable is a number average molecular weight of less than or equal to about 100,000, preferably less than or equal to about 75,000, more preferably less than or equal to about 50,000, and most preferably less than or equal to about 35, 000 g/mole.

Polyester polymers are also suitable and may be obtained through the condensation or ester interchange polymerization of the polymer precursors such as diol or diol chemical equivalent component with the diacid or diacid chemical equivalent component and having recurring units of the formula (VIII): 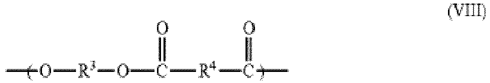 wherein R³ represents an alkyl or cycloalkyl radical containing 2 to 12 carbon atoms and which is the residue of a straight chain, branched, or cycloaliphatic alkane diol having 2 to 12 carbon atoms or chemical equivalents thereof; and R⁴ is an alkyl or a cycloaliphatic radical which is the decarboxylated residue derived from a diacid, with the proviso that at least one of R³ or R⁴ is a cycloalkyl group.

A preferred cycloaliphatic polyester is poly(1,4-cyclohexane-dimethanol-1,4-cyclohexanedicarboxylate) having recurring units of formula (IX) 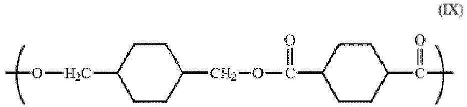 wherein in the formula (VIII), R³ is a cyclohexane ring, and wherein R⁴ is a cyclohexane ring derived from cyclohexanedicarboxylate or a chemical equivalent thereof and is selected from the cis- or trans-isomer or a mixture of cis- and trans-isomers thereof. Cycloaliphatic polyester polymers can be generally made in the presence of a suitable catalyst such as a tetra(2-ethyl hexyl)titanate, in a suitable amount, typically about 50 to 400 ppm of titanium based upon the total weight of the final product. Poly(1,4-cyclohexanedimethanol-1,4-cyclohexanedicarboxylate) generally forms a suitable blend with the polycarbonate. Aromatic polyesters or polyarylates can also be used.

Preferably, the number average molecular weight of the copolyestercarbonates or the polyesters is about 3,000 to about 1,000,000 g/mole. Within this range, it is desirable to have a number average molecular weight of greater than or equal to about 10,000, preferably greater than or equal to about 20,000, and more preferably greater than or equal to about 25,000 g/mole. Also desirable is a number average molecular weight of less than or equal to about 100,000, preferably less than or equal to about 75,000, more preferably less than or equal to about 50,000, and most preferably less than or equal to about 35, 000 g/mole.

In another embodiment, the organic polymers include polystyrene. The term "polystyrene" as used herein includes polymers prepared by bulk, suspension and emulsion polymerization, which contain at least 25% by weight of polymer precursors having structural units derived from a monomer of the formula (X): 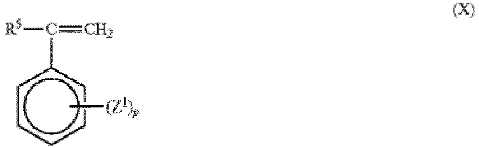 wherein R⁵ is hydrogen, lower alkyl or halogen; Z¹ is vinyl, halogen or lower alkyl; and p is from 0 to about 5. These organic polymers include homopolymers of styrene, chlorostyrene and vinyltoluene, random copolymers of styrene with one or more monomers illustrated by acrylonitrile, butadiene, alpha-methylstyrene, ethylvinylbenzene, divinylbenzene and maleic anhydride, and rubber-modified polystyrenes including blends and grafts, wherein the rubber is a polybutadiene or a rubbery copolymer of about 98 to about 70 wt % styrene and about 2 to about 30 wt % diene monomer. Polystyrenes are miscible with polyphenylene ether in all proportions, and any such blend can contain polystyrene in amounts of about 5 to about 95 wt % and most often about 25 to about 75 wt %, based on the total weight of the polymers.

In yet another embodiment, polyimides can be used in the compositions. Useful thermoplastic polyimides have the general formula (XI) 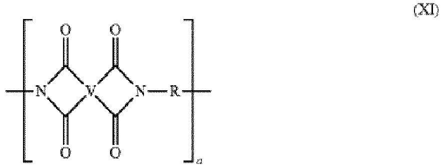 wherein a is greater than or equal to about 10, and more preferably greater than or equal to about 1000; and wherein V is a tetravalent linker without limitation, as long as the linker does not impede synthesis or use of the polyimide. Suitable linkers include (a) substituted or unsubstituted, saturated, unsaturated or aromatic monocyclic and polycyclic groups having about 5 to about 50 carbon atoms, (b) substituted or unsubstituted, linear or branched, saturated or unsaturated alkyl groups having 1 to about 30 carbon atoms; or combinations thereof. Suitable substitutions and/or linkers include, but are not limited to, ethers, epoxides, amides, esters, and combinations thereof. Preferred linkers include but are not limited to tetravalent aromatic radicals of formula (XII), such as 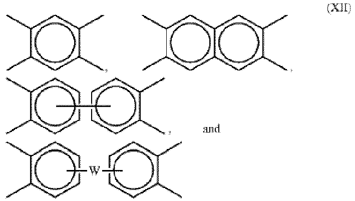 wherein W is a divalent moiety selected from the group consisting of --O--, --S- -, --C(O)--, --SO₂--, --SO--, --C_{y}H_{2y}-- (y being an integer from 1 to 5), and halogenated derivatives thereof, including perfluoroalkylene groups, or a group of the formula --O--Z--Owherein the divalent bonds of the --O-- or the --O--Z--O-- group are in the 3,3',3,4',4,3', or the 4,4' positions, and wherein Z includes, but is not limited, to divalent radicals of formula (XIII). 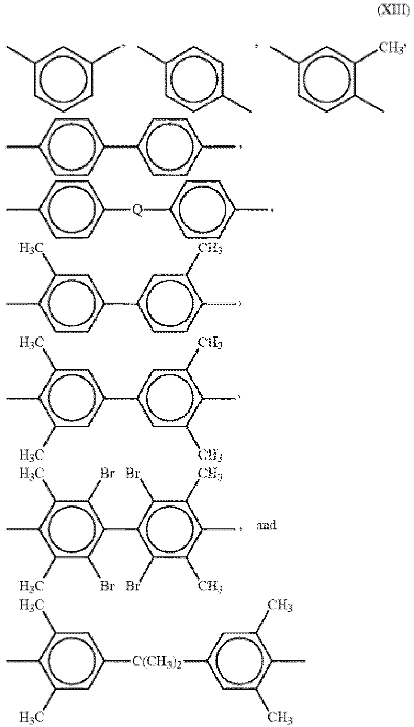 R in formula (XI) includes substituted or unsubstituted divalent organic radicals such as (a) aromatic hydrocarbon radicals having about 6 to about 20 carbon atoms and halogenated derivatives thereof; (b) straight or branched chain alkylene radicals having about 2 to about 20 carbon atoms; (c) cycloalkylene radicals having about 3 to about 20 carbon atoms, or (d) divalent radicals of the general formula (XIV) 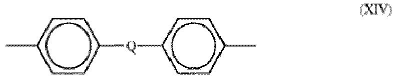 wherein Q includes a divalent moiety selected from the group consisting of --O--, --S--, --C(O)--, --SO₂--, --SO--, --C_{y}H_{2y}-- (y being an integer from 1 to 5), and halogenated derivatives thereof, including perfluoroalkylene groups.

Preferred classes of polyimides that can be used in the compositions include polyamidimides and polyetherimides, particularly melt-processable polyetherimides.

Preferred polyetherimide polymers include more than 1, preferably about 10 to about 1000 or more, and more preferably about 10 to about 500 structural units, of the formula (XV) 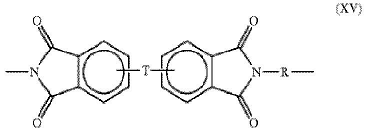 wherein T is --O-- or a group of the formula --O--Z--O-- wherein the divalent bonds of the --O-- or the --O--Z--O-- group are in the 3,3',3,4',4,3', or the 4,4' positions, and wherein Z includes, but is not limited, to divalent radicals of formula (XIII) as defined above.

In one embodiment, the polyetherimide can be a copolymer, which, in addition to the etherimide units above, further contains polyimide structural units of the formula (XVI) 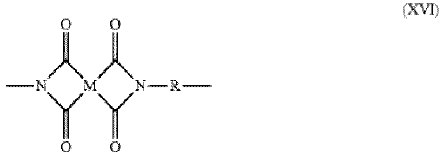 wherein R is as previously defined for formula (XI) and M includes, but is not limited to, radicals of formula (XVII). 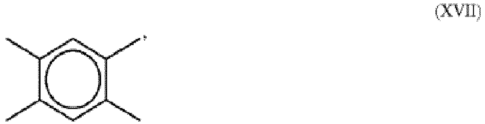 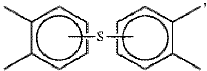 and

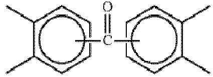

The polyetherimide can be prepared by any of the methods including the reaction of an aromatic bis(ether anhydride) of the formula (XVIII) 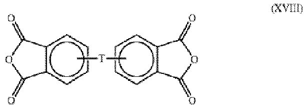 with an organic diamine of the formula (XIX)

H₂N--R--NH₂ (XIX)

wherein T and R are defined as described above in formulas (XI) and (XIV).

Illustrative examples of aromatic bis(ether anhydride)s of formula (XVIII) include 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, and mixtures.

The bis(ether anhydride)s can be prepared by the hydrolysis, followed by dehydration, of the reaction product of a nitro substituted phenyl dinitrile with a metal salt of dihydric phenol compound in the presence of a dipolar, aprotic solvent. A preferred class of aromatic bis(ether anhydride)s included by formula (XVIII) above includes, but is not limited to, compounds wherein T is of the formula (XX) 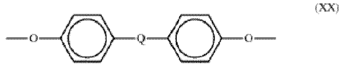 and the ether linkages, for example, are preferably in the 3,3',3,4',4,3', or 4,4' positions, and mixtures thereof, and where Q is as defined above.

Any diamino compound can be employed in the preparation of the polyimides and/or polyetherimides.

In an exemplary embodiment, the polyetherimide resin includes structural units according to formula (XV) wherein each R is independently p-phenylene or m-phenylene or a mixture thereof and T is a divalent radical of the formula (XXI)

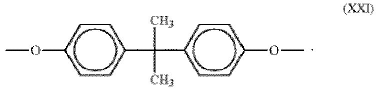

In general, the reactions can be carried out employing solvents such as o-dichlorobenzene, m-cresol/toluene, or the like, to effect a reaction between the anhydride of formula (XVIII) and the diamine of formula (XIX), at temperatures of about 100 deg. C. to about 250 deg. C. Alternatively, the polyetherimide can be prepared by melt polymerization of aromatic bis(ether anhydride)s of formula (XVIII) and diamines of formula (XIX) by heating a mixture of the starting materials to elevated temperatures with concurrent stirring. Generally, melt polymerizations employ temperatures of about 200 deg. C. to about 400 deg. C. Chain stoppers and branching agents can also be employed in the reaction. When polyetherimide/polyimide copolymers are employed, a dianhydride, such as pyromellitic anhydride, is used in combination with the bis(ether anhydride). The polyetherimide polymers can optionally be prepared from reaction of an aromatic bis(ether anhydride) with an organic diamine in which the diamine is present in the reaction mixture at no more than about 0.2 molar excess, and preferably less than about 0.2 molar excess. Under such conditions the polyetherimide resin has less than about 15 microequivalents per gram (µeq/g) acid titratable groups, and preferably less than about 10 µeq/g acid titratable groups, as shown by titration with chloroform solution with a solution of 33 weight percent (wt %) hydrobromic acid in glacial acetic acid. Acid-titratable groups are due to amine end-groups in the polyetherimide resin.

Generally, useful polyetherimides have a melt index of about 0.1 to about 10 grams per minute (g/min), as measured by American Society for Testing Materials (ASTM) D1238 at 295 deg. C., using a 6.6 kilogram (kg) weight. In a preferred embodiment, the polyetherimide resin has a weight average molecular weight (Mw) of about 10,000 to about 150,000 grams per mole (g/mole), as measured by gel permeation chromatography, using a polystyrene standard. Such polyetherimide polymers typically have an intrinsic viscosity greater than about 0.2 deciliters per gram (dl/g), preferably about 0.35 to about 0.7 dl/g measured in m-cresol at 25 deg. C.

In yet another embodiment, polyamides can be used as the organic polymers in the composition. Polyamides are generally derived from the polymerization of organic lactams having from 4 to 12 carbon atoms. Preferred lactams are represented by the formula (XXII) 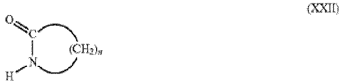 wherein n is about 3 to about 11. A highly preferred lactam is epsilon-caprolactam having n equal to 5.

Polyamides can also be synthesized from amino acids having from 4 to 12 carbon atoms. Preferred amino acids are represented by the formula (XXIII) 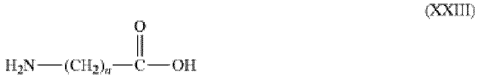 wherein n is about 3 to about 11. A highly preferred amino acid is epsilon-aminocaproic acid with n equal to 5.

Polyamides can also be polymerized from aliphatic dicarboxylic acids having from 4 to 12 carbon atoms and aliphatic diamines having from 2 to 12 carbon atoms. Suitable and preferred aliphatic dicarboxylic acids are the same as those described above for the synthesis of polyesters. Preferred aliphatic diamines are represented by the formula (XXIV) H₂N-(CH₂)ₙ-NH₂ (XXIV) wherein n is about 2 to about 12. A highly preferred aliphatic diamine is hexamethylenediamine (H₂N(CH₂)₆NH₂). It is preferred that the molar ratio of the dicarboxylic acid to the diamine be about 0.66 to about 1.5. Within this range it is generally desirable to have the molar ratio be greater than or equal to about 0.81, preferably greater than or equal to about 0.96. Also desirable within this range is an amount of less than or equal to about 1.22, preferably less than or equal to about 1.04. The preferred polyamides are nylon 6, nylon 6,6, nylon 4,6, nylon 6, 12, nylon 10, or the like, or combinations including at least one of the foregoing nylons.

Synthesis of polyamideesters can also be accomplished from aliphatic lactones having from 4 to 12 carbon atoms and aliphatic lactams having from 4 to 12 carbon atoms. The aliphatic lactones are the same as those described above for polyester synthesis, and the aliphatic lactams are the same as those described above for the synthesis of polyamides. The ratio of aliphatic lactone to aliphatic lactam can vary widely depending on the desired composition of the final copolymer, as well as the relative reactivity of the lactone and the lactam. A presently preferred initial molar ratio of aliphatic lactam to aliphatic lactone is about 0.5 to about 4. Within this range a molar ratio of greater than or equal to about 1 is desirable. Also desirable is a molar ratio of less than or equal to about 2.

The precursor composition can further include a catalyst or an initiator. Generally, any known catalyst or initiator suitable for the corresponding thermal polymerization can be used. Alternatively, the polymerization can be conducted without a catalyst or initiator. For example, in the synthesis of polyamides from aliphatic dicarboxylic acids and aliphatic diamines, no catalyst is required.

For the synthesis of polyamides from lactams, suitable catalysts include water and the omega-amino acids corresponding to the ring-opened (hydrolyzed) lactam used in the synthesis. Other suitable catalysts include metallic aluminum alkylates (MA1(OR)₃H; wherein M is an alkali metal or alkaline earth metal, and R is C₁-C₁₂ alkyl), sodium dihydrobis(2-methoxyethoxy)aluminate, lithium dihydrobis(tert-butoxy)aluminate, aluminum alkylates (Al(OR)₂R; wherein R is C₁-C₁₂ alkyl), N-sodium caprolactam, magnesium chloride or bromide salt of epsilon-caprolactam (MgXC₆H₁₀NO, X.dbd.Br or CI), dialkoxy aluminum hydride. Suitable initiators include isophthaloybiscaprolactam, N-acetalcaprolactam, isocyanate epsilon-caprolactam adducts, alcohols (ROH; wherein R is C₁-C₁₂ alkyl), diols (HO--R--OH; wherein R is R is C₁-C₁₂ alkylene), omega-aminocaproic acids, and sodium methoxide.

The polyamides can also be semi-aromatic polyamides, such as PA4.T, PA6.T, or PA9.T polyamides. As used herein, a "semi-aromatic polyamide" is understood to be a polyamide homo- or copolymer that contains aromatic or semi-aromatic units derived from an aromatic dicarboxylic acid, an aromatic diamine, or an aromatic aminocarboxylic acid, the content of said units being at least 50 mol %. In some cases these semi-aromatic polyamides are blended with small amounts of aliphatic polyamides for better processability. They are available commercially, from e.g., DuPont, Wilmington, Del., USA under the Tradename Zytel HTN™; Solvay Advanced Polymers under the Tradename Amodel™; or from DSM, Sittard, The Netherlands under the Tradename Stanyl For Tii™.

For the synthesis of polyamideesters from lactones and lactams, suitable catalysts include metal hydride compounds, such as a lithium aluminum hydride catalysts having the formula LiAl(H)ₓ(R¹)_{y}, where x is about 1 to about 4, y is about 0 to about 3, x+y is equal to 4, and R¹ is selected from the group consisting of C₁-C₁₂ alkyl and C₁-C₁₂ alkoxy; highly preferred catalysts include LiAl(H)(OR²)₃, wherein R² is selected from the group consisting of C₁-C₈ alkyl; an especially preferred catalyst is LiAl(H)(OC(CH₃)₃)₃. Other suitable catalysts and initiators include those described above for the polymerization of poly(epsilon-caprolactam) and poly(epsilon-caprolactone).

The high molecular weight polyesters used in the practice of the present invention are polymeric diol or glycol esters of terephthalic acid and/or isophthalic acid. They are widely available commercially, e.g., SABIC, poly(1,4-butylene terephthalate) resins under the Trademark VALOX™., Goodyear Tire and Rubber Company, USA, poly(ethylene terephthalate) under the Tradename VITUF™, and PCT (polycyclohexylterephthalate), a high-temperature polyester available commercially from Eastman Chemical Co., Kingsport, TN, USA and DuPont, Wilmington, DE, USA. Otherwise they can be readily prepared by known techniques, such as by the alcoholysis of esters of terephthalic and/or isophthalic acid with a glycol and subsequent polymerization, by heating glycols with free acids or with halide derivatives thereof, and similar processes. These are described in U.S. Pat. Nos. 2,465,319and 3,047,539, and elsewhere.

Although the glycol portion of the polyester can contain from 2 to 10 atoms, it is preferred that it contain from 2 to 4 carbon atoms in the form of linear methylene chains.

Preferred polyesters be of high molecular weight polymeric glycol terephthalates or isophthalates having repeating units of the general formula (XXV) 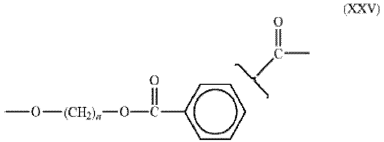 wherein n is a whole number from 2-4, and mixtures thereof, including copolyesters of terephthalic and isophthalic acids of up to 30 mole percent isophthalic units.

Especially preferred polyesters are poly(ethylene terephthalate) and poly(1,4-butylene terephthalate). Special mention is made of the latter because it crystallizes at such a good rate that it can be used for injection molding without the need for nucleating agents or long cycles, as is sometimes necessary with poly(ethylene terephthalate).

Illustratively, high molecular weight polyesters, such as poly(1,4-butylene terephthalate), will have an intrinsic viscosity of at least about 0.7 deciliters/gram and, preferably, at least 0.8 deciliters/gram as measured in a 60:40 phenol tetrachloroethane mixture at 30.degree. C. At intrinsic viscosities of at least about 1.0 deciliters/gram, there is further enhancement of toughness of the present compositions.

The copolyesters useful for the present compositions are preferably prepared from terephthalic acid, isophthalic acid, or reactive derivatives thereof, or any combination of the foregoing, and a glycol, which can be a straight or branched chain aliphatic and/or cycloaliphatic glycol. Additionally, other dicarboxylic acids useful for the acid component of the copolyesters include, without limitation, aromatic dicarboxylic acids such as napthalene dicarboxylic acid, and compounds of the formula (XXVI) 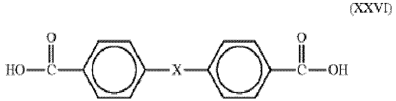 in which X can be alkylene or alkylidene of from 1 to 4 carbon atoms, carbonyl, sulfonyl, oxygen or a bond between the benzene rings, and the like, and aliphatic dicarboxylic acids having from 6 to 12 carbon atoms in the chain including suberic acid, sebacic acid, azelaic acid, adipic acid and the like.

The foregoing copolyesters can be prepared by ester interchange in accordance with standard procedures. These copolyesters can preferably be derived from at least 50% poly(1,4-butylene terephthalate) units.

Also useful for the compositions of the present invention are block copolyesters derived from blocks of (i) terminally-reactive poly(1,4-butylene terephthalate), preferably of low molecular weight, and (ii) terminally-reactive copolyesters, as described above, or (iii) a terminally-reactive aliphatic polyester, or any combination thereof. The terminal groups can include hydroxyl, carboxyl, carboalkoxy, and the like, including reactive derivatives thereof.

Generally, these block copolyesters can be prepared by reacting the aforementioned terminally-reactive units in the presence of a catalyst for transesterification, such as zinc acetate, manganese acetate, titanium esters and the like. After initial mixing polymerization is carried out under standard conditions, e.g., 220 deg. to 280 deg. C, in a high vacuum e.g., 0.1 to 2 mm Hg, to form the block copolymer of minimum randomization in terms of distribution of chain segments. These block copolyesters are described in U.S. patent application Ser. No. 752,325.

Preferably, the copolyester units (ii) are derived from an aliphatic glycol and a mixture of aromatic and aliphatic dibasic acids in which the mole ratio concentration of aromatic to aliphatic acids is from 1 to 9 to about 9 to 1, e.g., from about 3 to 7 to about 7 to 3.

Further, the terminally-reactive aliphatic polyester units (iii) will contain substantially stoichiometric amounts of the aliphatic diol and the aliphatic dicarboxylic acid, although hydroxy-containing terminal groups are preferred.

In addition, to their ease of formation by well-known procedures, both the aromatic/aliphatic copolyesters (ii) and the aliphatic polyesters (iii) are commercially available. One source for such materials is the Ruco Division/Hooker Chemical Company, Hicksville, N.Y., which designates its compounds as "Rucoflex™".

In general, the block copolyesters useful for the invention preferably include from 95 to 50 parts by weight of segments of poly(1,4-butylene terephthalate). Those poly(1,4-butylene terephthalate) blocks, before incorporation into the block copolyester, will preferably have an intrinsic viscosity of above 0.1 dl/g. and more preferably, between 0.1 to 0.5 dl/g., as measured in a a 60:40 mixture of phenol tetrachlorethane at 30 degree. C. The balance, 50 to 5 parts by weight of the block copolyester will include blocks of copolyester (ii) and aliphatic polyester (iii) above.

As will be understood by those skilled in the art, the poly(1,4-butylene terephthalate) block can be straight chain or branched, e.g., by use of a branching component which contains at least 3 ester-forming groups. This can be a polyol, e.g., pentaerythritol, trimethylolpropane, and the like, or a polybasic acid compound, e.g., trimethyl trimesate, and the like. Branched poly(1,4-butylene terephthalate) resins and their preparation are described in U.S. Pat. No. 3,953,404 and 8,552,101. As described elsewhere herein, the thermoplastic may be present at from about 20 wt% to about 99 wt% of the composition, or from about 22 wt% to about 95 wt%, or from about 27 wt% to about 91 wt%, or from about 30 wt% to about 84 wt%, or from about 37 wt% to about 78 wt%, or from about 41 wt% to about 69 wt%, or from about 49 wt% to about 57 wt%.

One or more fillers may be used, e.g., graphite. Some producers provide expanded/exfoliated graphite, like Timcal TIMREX C-THERM™, SGL Carbon Ecophit G™, which can show higher thermal conductivity compared to conventional flake like graphite. A challenge with these materials, however, is compounding, as the expanded/exfoliated graphite is difficult to feed into extruders due to the material's low bulk density (e.g., 0.14 ∼ 0.15 g/cc) compared to conventional graphite density of over 0.5 g/cc.

In addition to the thermoplastic polymer resin and fillers, the compositions of the present invention can include various additives ordinarily incorporated in resin compositions of this type. Mixtures of additives can be used. Such additives can be mixed at a suitable time during the mixing of the components for forming the composition. The one or more additives are included in the thermoplastic compositions to impart one or more selected characteristics to the thermoplastic compositions and any molded article made therefrom. Examples of additives that can be included in the present invention include, but are not limited to, heat stabilizers, process stabilizers, antioxidants, light stabilizers, plasticizers, antistatic agents, mold releasing agents, UV absorbers, lubricants, pigments, dyes, colorants, flow promoters, flame retardants, or a combination of one or more of the foregoing additives.

Suitable heat stabilizers include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers are generally used in amounts of from 0.01 to 0.5 parts by weight based on 100 parts by weight of the total composition, excluding any filler.

Suitable antioxidants include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants are generally used in amounts of from 0.01 to 0.5 parts by weight, based on 100 parts by weight of the total composition, excluding filler.

Suitable light stabilizers include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers are generally used in amounts of from 0.1 to 1.0 parts by weight, based on 100 parts by weight of the total composition, excluding any filler.

Suitable plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations including at least one of the foregoing plasticizers. Plasticizers are generally used in amounts of from 0.5 to 3.0 parts by weight, based on 100 parts by weight of the total composition, excluding any filler.

Suitable antistatic agents include, e.g., glycerol monostearate, sodium stearyl sulfonate, sodium dodecylbenzenesulfonate, polyether block amides, which are commercially available from, for example, BASF under the Tradename Irgastat; from Arkema under the Tradename PEBAX; and from Sanyo Chemical industries under the tradename Pelestat, or combinations of the foregoing antistatic agents. In one embodiment, carbon fibers, carbon nanofibers, carbon nanotubes, carbon black, or any combination can be used in a polymeric resin containing chemical antistatic agents to render the composition electrostatically dissipative.

Suitable mold releasing agents include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from 0.1 to 1.0 parts by weight, based on 100 parts by weight of the total composition, excluding any filler.

Suitable UV absorbers include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB.TM. 5411); 2-hydroxy-4-n-octyloxybenzophenone (CYASORB.TM. 531); 2-[4,6-bis(2,4-dimethylphenyl)-1,3,5-triazin-2-yl]-5-(octyloxy)-phenol (CYASORB.TM. 1164); 2,2'-(1,4-phenylene)bis(4H-3,1-benzoxazin-4-one) (CYASORB.TM. UV-3638); 1,3-bis[(2-cyano-3,3-diphenylacryloyl)oxy]-2,2-bis[[(2-cyano-3,3-diphenyl- acryloyl)oxy]methyl]propane (UVINUL.TM. 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenyl- acryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight based on 100 parts by weight of the total composition, excluding any filler.

Suitable lubricants include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants are generally used in amounts of from 0.1 to 5 parts by weight, based on 100 parts by weight of the total composition, excluding any filler.

Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates; sulfates and chromates; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations including at least one of the foregoing pigments. Pigments are generally used in amounts of from 1 to 10 parts by weight, based on 100 parts by weight based on 100 parts by weight of the total composition, excluding any filler.

Suitable dyes include, for example, organic dyes such as coumarin 460 (blue), coumarin 6 (green), nile red or the like; lanthanide complexes; hydrocarbon and substituted hydrocarbon dyes; polycyclic aromatic hydrocarbons; scintillation dyes (preferably oxazoles and oxadiazoles); aryl- or heteroaryl-substituted poly (2-8 olefins); carbocyanine dyes; phthalocyanine dyes and pigments; oxazine dyes; carbostyryl dyes; porphyrin dyes; acridine dyes; anthraquinone dyes; arylmethane dyes; azo dyes; diazonium dyes; nitro dyes; quinone imine dyes; tetrazolium dyes; thiazole dyes; perylene dyes, perinone dyes; bis-benzoxazolylthiophene (BBOT); and xanthene dyes; fluorophores such as anti-stokes shift dyes which absorb in the near infrared wavelength and emit in the visible wavelength, or the like; luminescent dyes such as 5-amino-9-diethyliminobenzo(a)phenoxazonium perchlorate; 7-amino-4-methylcarbostyryl; 7-amino-4-methylcoumarin; 3-(2'-benzimidazolyl)-7-N,N-diethylaminocoumarin; 3-(2'-benzothiazolyl)-7-diethylaminocoumarin; 2-(4-biphenylyl)-5-(4-t-butylphenyl)-1,3,4-oxadiazole; 2-(4-biphenyl)-6-phenylbenzoxazole-1,3; 2,5-Bis-(4-biphenylyl)-1,3,4-oxadiazole; 2,5-bis-(4-biphenylyl)-oxazole; 4,4'-bis-(2-butyloctyloxy)-p-quaterphenyl; p-bis(o-methylstyryl)-benzene; 5,9-diaminobenzo(a)phenoxazonium perchlorate; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-diethylamino-4-methylcoumarin; 7-diethylamino-4-trifluoromethylcoumarin; 2,2'-dimethyl-p-quaterphenyl; 2,2-dimethyl-p-terphenyl; 7-ethylamino-6-methyl-4-trifluoromethylcoumarin; 7-ethylamino-4-trifluoromethylcoumarin; nile red; rhodamine 700; oxazine 750; rhodamine 800; IR 125; IR 144; IR 140; IR 132; IR 26; IR5; diphenylhexatriene; diphenylbutadiene; tetraphenylbutadiene; naphthalene; anthracene; 9,10-diphenylanthracene; pyrene; chrysene; rubrene; coronene; phenanthrene or the like, or combinations including at least one of the foregoing dyes. Dyes are generally used in amounts of from 0.1 to 5 parts by weight, based on 100 parts by weight of the total composition, excluding any filler.

Suitable colorants include, for example titanium dioxide, anthraquinones, perylenes, perinones, indanthrones, quinacridones, xanthenes, oxazines, oxazolines, thioxanthenes, indigoids, thioindigoids, naphthalimides, cyanines, xanthenes, methines, lactones, coumarins, bis-benzoxazolylthiophene (BBOT), napthalenetetracarboxylic derivatives, monoazo and disazo pigments, triarylmethanes, aminoketones, bis(styryl)biphenyl derivatives, and the like, as well as combinations including at least one of the foregoing colorants. Colorants are generally used in amounts of from 0.1 to 5 parts by weight, based on 100 parts by weight of the total composition, excluding any filler.

Suitable blowing agents include for example, low boiling halohydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4' oxybis(benzenesulfonylhydrazide), sodium bicarbonate, ammonium carbonate, or the like, or combinations including at least one of the foregoing blowing agents. Blowing agents may be present at from 1 to 20 parts by weight, based on 100 parts by weight of the total composition, excluding any filler.

Additionally, materials to improve flow and other properties can be added to the composition, such as low molecular weight hydrocarbon resins or dendritic polyols (such as Boltorn from Perstop) or dendritic polyesteramides (such as Hybrane from DSM). Particularly useful classes of low molecular weight hydrocarbon resins are those derived from petroleum C5 to C9 feedstock that are derived from unsaturated C5 to C9 monomers obtained from petroleum cracking. Non-limiting examples include olefins, e.g.b pentenes, hexenes, heptenes and the like; diolefins, e.g. pentadienes, hexadienes and the like; cyclic olefins and diolefins, e.g. cyclopentene, cyclopentadiene, cyclohexene, cyclohexadiene, methyl cyclopentadiene and the like; cyclic diolefin dienes, e.g., dicyclopentadiene, methylcyclopentadiene dimer and the like; and aromatic hydrocarbons, e.g. vinyltoluenes, indenes, methylindenes and the like. The resins can additionally be partially or fully hydrogenated.

Examples of flame retardants include, but are not limited to, halogenated flame retardants, like tretabromo bisphenol A oligomers such as BC58 and BC52, brominated polystyrene or poly(dibromo-styrene), brominated epoxies, decabromodiphenyleneoxide, pentabrombenzyl acrylate monomer, pentabromobenzyl acrylate polymer, ethylene-bis(tetrabromophthalimide, bis(pentabromobenzyl)ethane, metal hydroxides like Mg(OH)₂ and Al(OH)₃, melamine cyanurate, phosphor based FR systems like red phosphorus, melamine polyphosphate, phosphate esters, metal phosphinates, ammonium polyphosphates, expandable graphites, sodium or potassium perfluorobutane sulfate, sodium or potassium perfluorooctane sulfate, sodium or potassium diphenylsulfone sulfonate and sodium- or potassium-2,4,6-trichlorobenzoate and N-(p-tolylsulfonyl)-p-toluenesulfimide potassium salt, N--(N'-benzylaminocarbonyl)sulfanylimide potassium salt, or a combination containing at least one of the foregoing. Fillers and additives can be added in amounts ranging from about 0.1 to about 40% or even about 50% by weight percent of the total composition.

The thermoplastic compositions of the present invention can be formed using known methods for dispersing fillers in a thermoplastic resin. The compositions or composites can be processed by a melt compounding process or solution blending process.

Melt blending of the moldable composition involves the use of shear force, extensional force, compressive force, ultrasonic energy, electromagnetic energy, thermal energy or combinations comprising at least one of the foregoing forces or forms of energy and is conducted in processing equipment wherein the aforementioned forces or forms of energy are exerted by a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing.

Melt blending can be conducted in machines such as single or multiple screw extruders, Buss kneader, Henschel, helicones, Ross mixer, Banbury, roll mills, molding machines such as injection molding machines, vacuum forming machines, blow molding machine, or the like, or combinations comprising at least one of the foregoing machines.

In one embodiment, the organic polymer in powder form, pellet form, sheet form, or the like, can be first dry blended with the fillers mill before being fed into a melt blending device such as an extruder or Buss kneader. It can be desirable to introduce the fillers into the melt blending device in the form of a masterbatch. In such a process, the masterbatch can be downstream of where the organic polymer is introduced.

A melt blend is one where at least a portion of the organic polymer has reached a temperature greater than or equal to about the melting temperature, if the resin is a semi-crystalline organic polymer, or the flow point (e.g., the glass transition temperature) if the resin is an amorphous resin during the blending process. A dry blend is one where the entire mass of organic polymer is at a temperature less than or equal to about the melting temperature if the resin is a semi-crystalline organic polymer, or at a temperature less than or equal to the flow point if the organic polymer is an amorphous resin and wherein organic polymer is substantially free of any liquid-like fluid during the blending process. A solution blend, as defined herein, is one where the organic polymer is suspended in a liquid-like fluid such as, for example, a solvent or a non-solvent during the blending process.

The moldable composition comprising the organic polymer and fillers can be subject to multiple blending and forming steps if desirable. For example, the moldable composition can first be extruded and formed into pellets. The pellets can then be fed into a molding machine where it can be formed into any desirable shape or product. Alternatively, the moldable composition emanating from a single melt blender can be formed into sheets or strands and subjected to post-extrusion processes such as annealing, uniaxial or biaxial orientation.

In one aspect, the fillers can first be dry blended together with any foregoing mentioned additives, then fed into an extruder from one or multi-feeders, or fillers separately feed into extruder from one or multi-feeders. The organic polymer resin or any polymer combination can be, in one aspect, in powder or pellet form, and can be first dry blended with each other, or dry blended with any combination of the foregoing mentioned fillers, then fed into an extruder from one or multiple-feeders. The fillers used in the invention can also be first processed into a masterbatch, and then fed into an extruder.

The feeding of organic polymers, fillers, masterbatch or any combination of polymers,or filler blends can be fed into an extruder from a throat hopper or side feeders.

The extruders used in the invention can have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing. The melt blending of the composites involves the use of shear force, extensional force, compressive force, ultrasonic energy, electromagnetic energy, thermal energy or combinations comprising at least one of the foregoing forces or forms of energy.

The barrel temperature on the extruder during compounding can be set at the temperature where at least a portion of the organic polymer has reached a temperature greater than or equal to about the melting temperature, if the resin is a semi-crystalline organic polymer, or the flow point (e.g., the glass transition temperature) if the resin is an amorphous resin.

Solution blending can also be used to manufacture the moldable composition. The solution blending can also use additional energy such as shear, compression, ultrasonic vibration, or the like, to promote homogenization of fillers with the organic polymer. In one embodiment, an organic polymer suspended in a fluid can be introduced into an ultrasonic sonicator along with any foregoing fillers. The mixture can be solution blended by sonication for a time period effective to disperse the fillers into the organic polymers. The organic polymer along with the fillers can then be dried, extruded and molded if desired.

The moldable composition comprising the organic polymer, fillers, and optional additives can be subject to multiple blending and forming steps if desirable. For example, the moldable composition can first be extruded and formed into pellets. The pellets can then be fed into a molding machine where it can be formed into any desirable shape or product. Alternatively, the moldable composition emanating from a single melt blender can also be formed into sheets or strands and subjected to post-extrusion processes such as annealing, uniaxial or biaxial orientation. The polymeric compositions can be formed into moldable stock material or moldable articles using techniques known to those in the art.

In sum, talc-filled ABS provides a unique material with very high modulus, very high flow, very good hydro stability and excellent surface aesthetics.

The following non-limiting aspects are illustrative of the present disclosure:
Aspect 1. A composition, comprising: (a) from about 40 to about 65 wt% (e.g., from about 50-60 wt%) of styrene-acrylonitrile (SAN) copolymer; (b) from about 3 to about 33 wt% (e.g., from about 23 to about 27 wt%) of styrene-acrylonitrile - acrylonitrile-butadiene-styrene (SAN-ABS) graft copolymer; (c) from about 2 to about 30 wt% talc; and (d) one or more modifiers, wherein a wt% is calculated on the basis of the total weight of (a), (b), (c), and (d), and wherein the combined wt% value of all components does not exceed 100 wt%.

The composition may have from about 41 to about 65 wt% SAN, or from about 43 to about 63 wt% SAN, or from about 45 to about 60 wt% SAN, or from about 47 to about 57 wt% SAN, from about 49 to about 54 wt% SAN. The composition may have from 40 to 65 wt% SAN. In some embodiments, however, a composition may have from about 35 to about 75 wt% SAN copolymer.

The composition may have from about 22 to about 29 wt%, or from about 23 to about 27 wt%, or from 25 to about 27 wt% of SAN-ABS graft copolymer. The composition may have from 3 to 33% SAN-ABS graft copolymer. The composition may have from about 5 to about 25 wt%, or from about 7 to about 22 wt%, or even from about 10 to about 20 wt% talc. The composition may have from 2 to 30 wt% talc.

The SAN copolymer may be between 5 and 95% by weight styrene and 95 to 5% acrylonitrile by weight. In some embodiments, the SAN copolymer may be between 70 and 80% by weight styrene and 20 to 30% acrylonitrile by weight.
Aspect 2. The composition of aspect 1, wherein the SAN-ABS copolymer comprises from about 10 to about 65 wt% rubber content (including from 10 to 65 wt%), wherein wt% is defined as wt% butadiene per unit of SAN-ABS copolymer. In some embodiments, the proportions in the ABS portion of the SAN-ABS copolymer can range from 15 to 35% acrylonitrile, 5 to 30% butadiene and 40 to 60% styrene. SAN-ABS copolymer may be present at form about 1 to about 50 wt%, or from about 3 to about 33 wt%, and all intermediate values.
Aspect 3. The composition of any of aspects 1-2, wherein the SAN-ABS comprises from about 0 to about 4.0 wt% acrylic (e.g., MMA), based on the amount of acrylic in the SAN-ABS. In some embodiments, the MMA is present in the SAN-ABS, and the acrylic is co-polymerized with the SAN-ABS. As one example, the SAN-ABS may comprise from more than 0 to 4.0 wt% acrylic (e.g., MMA), based on the amount of acrylic in the SAN-ABS.
Aspect 4. The composition of any of aspects 1-3, wherein the talc comprises an amount of surface active agent. Sodium alkane sulfonate is considered one such suitable agent. Surface active agents belonging to the groups of alkylsulfonate salts inlcude SAS (tetradecanesulfonic acid salt), SLS (sodium dodecyl sulfate), DBSA (sodium dodecylbenene sulfonate salt), combinations thereof, and the like.

Talc may be any talc commercially available, including those having a mean particle size ranging from 0.1 micrometer to 20 micrometers. Talc may have an average particle size between 2.5 and 20 micrometers or between 4.0 and 10 micrometers. Talc, when used, comprises, per 100 parts by weight of components a) and b) of aspect 1, 2 to 25 parts by weight. In some embodiments, 5 to 15 parts by weight of talc are used per 100 parts by weight of components a) and b) of aspect 1.

Mean particle size is defined as the corresponding size of the meshes in a sieve through which 50% by weight of the particles (dry) pass and 50% by weight are withheld. In this way the structure of the talc particles, usually lamellar, is not taken into account.

Aspect 5. The composition of any of aspects 1-4, wherein the modifier comprises a wax. The wax may be present at from about 0 to about 1.5 wt%, e.g., from more than 0 up to 1.5 wt%. Suitable waxes include stearate-derived waxes such as steric acid salts and stearate acid esters, oxidized olefin waxes (e.g., oxidized polyehthylene), a poloxamer (oxymethylene copolymer) wax such as Pluronic™, Synperonic™, and the like, a mold release agent, or any combination of the foregoing. EBS is considered a particularly suitable wax.

Fillers are also considered suitable modifiers. A filler may be present at from about 1 to about 40 wt%, e.g., from 1 to 40 wt%. One useful class of fillers is the particulate fillers, which may be of any configuration, for example spheres, plates, fibers, acicular, flakes, whiskers, or irregular shapes. Suitable fillers typically have an average longest dimension of about 1 nanometer to about 500 micrometers, specifically about 10 nanometers to about 100 micrometers, or even from 10 nm to 100 nm.

The average aspect ratio (length:diameter) of some fibrous, acicular, or whisker-shaped fillers (e.g., glass or wollastonite) may be about 1.5 to about 1000, although longer fibers are also within the scope of the invention. The mean aspect ratio (mean diameter of a circle of the same area: mean thickness) of plate-type fillers (e.g., mica, talc, or kaolin) may be greater than about 5, specifically about 10 to about 1000, more specifically about 10 to about 200. Bimodal, trimodal, or higher mixtures of aspect ratios may also be used.

The fillers may be of natural or synthetic, mineral or non-mineral origin, provided that the fillers have sufficient thermal resistance to maintain their solid physical structure at least at the processing temperature of the composition with which it is combined. Suitable fillers include clays, nanoclays, carbon black, wood flour either with or without oil, various forms of silica (precipitated or hydrated, fumed or pyrogenic, vitreous, fused or colloidal, including common sand), glass, metals, inorganic oxides (such as oxides of the metals in Periods 2, 3, 4, 5 and 6 of Groups Ib, IIb, IIIa, IIIb, IVa, IVb (except carbon), Va, VIIa, VIIa and VIII of the Periodic Table), oxides of metals (such as aluminum oxide, titanium oxide, zirconium oxide, titanium dioxide, nanoscale titanium oxide, aluminum trihydrate, vanadium oxide, and magnesium oxide), hydroxides of aluminum or ammonium or magnesium, carbonates of alkali and alkaline earth metals (such as calcium carbonate, barium carbonate, and magnesium carbonate), antimony trioxide, calcium silicate, diatomaceous earth, fuller earth, kieselguhr, mica, talc, slate flour, volcanic ash, cotton flock, asbestos, kaolin, alkali and alkaline earth metal sulfates (such as sulfates of barium and calcium sulfate), titanium, zeolites, wollastonite, titanium boride, zinc borate, tungsten carbide, ferrites, molybdenum disulfide, asbestos, cristobalite, aluminosilicates, and combinations thereof. Suitable fibrous fillers include glass fibers, basalt fibers, aramid fibers, carbon fibers, carbon nanofibers, carbon nanotubes, carbon buckyballs, ultra high molecular weight polyethylene fibers, melamine fibers, polyamide fibers, cellulose fiber, metal fibers, potassium titanate whiskers, and aluminum borate whiskers.

Of these, calcium carbonate, talc, glass fibers, carbon fibers, magnesium carbonate, mica, silicon carbide, kaolin, wollastonite, calcium sulfate, barium sulfate, titanium, silica, carbon black, ammonium hydroxide, magnesium hydroxide, aluminum hydroxide, and combinations comprising at least one of the foregoing are all suitable. Mica, talc, silicon carbide, and combinations comprising at least one of the foregoing fillers are of specific utility.

Alternatively, or in addition to a particulate filler, the filler may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

Optionally, the fillers may be surface modified, for example treated so as to improve the compatibility of the filler and the polymeric portions of the compositions, which facilitates deagglomeration and the uniform distribution of fillers into the polymers. One suitable surface modification is the durable attachment of a coupling agent that subsequently bonds to the polymers. Use of suitable coupling agents may also improve impact, tensile, flexural, and/or dielectric properties in plastics and elastomers; film integrity, substrate adhesion, weathering and service life in coatings; and application and tooling properties, substrate adhesion, cohesive strength, and service life in adhesives and sealants. Suitable coupling agents include silanes, titanates, zirconates, zircoaluminates, carboxylated polyolefins, chromates, chlorinated paraffins, organosilicon compounds, and reactive cellulosics. Filler may be partially or entirely coated with a layer of metallic material to facilitate conductivity, e.g., gold, copper, silver, and the like.
Aspect 6. The composition of any of aspects 1-5, further comprising an amount of a fluoropolymer or perfluropolymer. PTFE is an exemplary fluoropolymer. PVF, PVDF, PFE, PCTFE, PFA, MFA, FEP, ETFE, ECTFE, FFPM/FFKM, FPM/FKM, PFPE, PFSA, perfluoropolyoxetane, and combinations thereof are also considered suitable.
Aspect 7. The composition of any of aspects 1-6, wherein a modifier comprises a reinforcement, a polymer, a colorant, or any combination thereof.
Aspect 8. The composition of aspect 7, wherein the polymer comprises a thermoplastic, a thermoset, or both. Suitable thermoplastics include, e.g., acrylics, ABS, polyamide, PLA, polybenzimidazole, polyethylene, polypropylene, polystyrene, PVC, a fluoropolymer, or any combination thereof. Suitable thermosets include polyesters, polyurethanes, vulcanized rubber, urea-formaldehyde, melamine resin, diallyl-phthalate , epoxy, polyimide, polycarbonate, cyanate ester, polycyanurates, or any combination thereof. PMMA, PS, MMASAN, and AMSAN are especially suitable polymers. Polymer(s) may be present at from about 5 to about 50 wt%, *e.g.,* from about 10 to about 40 wt%, or from 5 to 50 wt%.
Aspect 9. The composition of aspect 7, wherein the colorant comprises carbon black, TiO2, organic dyes, organic pigment, inorganic pigment, or any combination thereof.
Aspect 10. The composition of any of aspects 1-9 , wherein a reinforcement comprises carbon fiber, glass fiber, graphite, mica, clay, mineral filler, or any combination thereof.
Aspect 11. The composition of any of aspects 1-10, wherein the composition has a tensile modulus of from about 2.0 GPa to about 7 GPa (e.g., from 2 to 7 GPa), or even from from about 2.2 GPa to about 6.5 GPa, per the ASTM D638 standard (Jan. 1, 2015).
Aspect 12. The composition of any of aspects 1-11, wherein the composition has a melt volume rate of from about 10 cm³/10 min to about 50 cm³/10 min (e.g., from 10 to 5o cm³/10 min), per the ASTM D1238 standard (Jan. 1, 2015).
Aspect 13. The composition of any of aspects 1-12, wherein the composition has a coefficient of linear expansion (CLTE) of from about 20 to about 70 x 10⁻⁶l/deg. C, e.g., from 20 to 70 x 10⁻⁶l/deg. C.
Aspect 14. The composition of any of aspects 1-13, wherein the composition has a L* (CIELAB) in the range of from about 28 to about 30, *e.g.,* from 28 to 30. The disclosed compositions may also be characterized as having a gloss (measured at 60 deg.) of greater than about 40%, e.g., 50%, 60%, 70%, 80%, or higher.
Aspect 15. The composition of any of aspects 1-14, wherein the composition has a HDT in the range of from about 60 deg C. to about 100 deg. C, e.g., from 60 to 100 deg. C, or even from 80 to 90 deg. C.
Aspect 16. The composition of any of aspects 1-15, wherein the composition has an IZOD impact (notched, 23 deg. C, per ASTM D256, Jan. 1, 2015) in the range of about 5 to about 35 J/m, e.g., from 5 to 35 J/m.
Aspect 17. The composition of any of aspects 1-16, wherein the talc comprises a D50 of about 1 micrometer, e.g., 1 micrometer.
Aspect 18. The composition of any of aspects 1-17, wherein the composition has a 60 deg. gloss value (per ASTM D523, Jan. 1, 2015) of from about 50 to about 100 (*e.g.,* from 50 to 95), or from about 55 to about 95, or from about 60 to about 90, or from about 65 to about 85, or from 70 to about 80.
Aspect 19. The composition of any of aspects 1-18, wherein the ratio by weight of SAN to SAN-ABS is in the range of from 20:100 to 60:100, e.g., 42:100 to 56:100. In some embodiments, the resultant rubber content is from about 10 to about 20%, or from about 12 to 17% of the total polymer.
Aspect 20. An article, comprising the composition of any of aspects 1-19.
Aspect 21. The article of aspect 20, wherein the article comprises a film, a tub, a tub liner, an automotive spoiler, an instrument panel, an interior trim part, an exterior trim part, a roof fairing, a hood, a bumper, a mirror housing, a handle, a fender, a housing, a bezel, a case, a sanitary article, or any combination thereof.
Aspect 22. A method of improving one or more of gloss and surface splay resistance, comprising contacting a talc with a styrene-acrylonitrile (SAN) copolymer and a styrene-acrylonitrile - acrylonitrile-butadiene-styrene (SAN-ABS) graft copolymer so as to form a composition. A variety of methods may be used to contact and/or admix these various components; suitable such method will be known to those of ordinary skill in the art.
Aspect 23. The method of aspect 22, further comprising introducing a modifier before forming the composition.
Aspect 24. A method, comprising contacting in any order elements (a)-(d) of aspect 1 to one another, so as to form a composition.
Aspect 25. A composition, comprising: (a) from about 55 to about 60 wt% of styrene-acrylonitrile (SAN) copolymer; (b) from about 15 to about 33 wt% of styrene-acrylonitrile - acrylonitrile-butadiene-styrene (SAN-ABS) graft copolymer; (c) from about 5 to about 1 wt% talc; and (d) one or more modifiers, wherein a wt% is calculated on the basis of the total weight of (a), (b), (c), and (d), and wherein the combined weight percent value of all components does not exceed 100 wt%. It should be understood that this aspect may include one or more features of any of aspects 1-24.

The foregoing aspects are illustrative only.

**Table 1. Detailed descriptions of the building blocks used in this disclosure**

| # | **Item** | **Description** | **Supplier** | **Tradename** |
|---|---|---|---|---|
| 1 | VHRG | SAN grafted emulsion ABS | SABIC | CYCOLAC™ |
| 2 | HRG | SAN grafted emulsion ABS | SABIC | CYCOLAC™ |
| 3 | SAN | Styrene-acrylonitrile copolymer | SABIC | |
| 4 | 581SAN | Styrene-acrylonitrile copolymer | SABIC | |
| 5 | AMSAN | Poly (alphamethylstyrene-acrylonitrile) | SABIC | |
| 6 | talc | hydrated magnesium silicate | Luzenac | Jetfine 3CA™ |
| 7 | EBS | EBS-Wax | Lonza Inc. | |
| 8 | CB | Carbon black | Cabot Corporation | |
| 9 | MBS | Methyl methacrylate, butadiene and styrene copolymer | SABIC | |
| 10 | SAS | sodium alkane sulphonate | Clariant Corporation | |
| 11 | TSAN | SAN encapsulated PTFE | SABIC | |

**Table 2. Detailed formulations of the comparative experimental blends**

| # | **Item** | **A** | **E1** | **E2** | **E3** | **E4** | **E5** | **E6** | **E7** | **E8** |
|---|---|---|---|---|---|---|---|---|---|---|
| 1 | VHRG | 29.8 | 25.3 | 26.8 | 23.8 | 24.3 | 25 | 24.8 | 25.3 | |
| 2 | SAN | 69.5 | 59 | 62.5 | 55.5 | 56.7 | 58.4 | 57.8 | | 54 |
| 3 | HRG | | | | | | | | | 30.3 |
| 4 | AMSAN | | | | | | | | 59 | |
| 5 | Talc | | 15 | 10 | 20 | 15 | 15 | 15 | 15 | 15 |
| 6 | EBS | 0.4 | 0.4 | 0.4 | 0.4 | 0.4 | 0.4 | 0.4 | 0.4 | 0.4 |
| 7 | CB | 0.3 | 0.3 | 0.3 | 0.3 | 0.3 | 0.3 | 0.3 | 0.3 | 0.3 |
| 8 | MBS | | | | | 3.3 | | | | |
| 9 | SAS | | | | | | 0.9 | | | |
| 10 | TSAN | | | | | | | 1.7 | | |

**Table 3. Comparison of key properties for the experimental blends of Table 3.**

| **Properties** | **Method** | **Unit** | **A** | **E1** | **E2** | **E3** | **E4** | **E5** | **E6** | **E7** | **E8** |
|---|---|---|---|---|---|---|---|---|---|---|---|
| MVR, 260°C/5kg/360s | ASTM D1238 | cm³/10min | 44 | 16 | 20 | 12 | 12 | 22 | 2 | 6 | 24 |
| Tensile Modulus | ISO 527 | GPa | 2.3 | 3.9 | 3.4 | 4.5 | 3.8 | 3.7 | 4.1 | 3.9 | 3.8 |
| CLTE, flow | SABIC Internal | 10⁻⁶ 1/°C | 82 | 59 | 64 | 48 | 56 | 54 | 53 | 49 | 56 |
| HDT | ISO 75 | °C | 81 | 86 | 84 | 88 | 85 | 84 | 86 | 96 | 86 |
| Vicat softening point | ISO 306 | °C | 97 | 100 | 99 | 100 | 99 | 99 | 99 | 110 | 99 |

**Table 4. Detailed formulations of experimental blends using 581SAN and ABS**

| # | **Item** | **B** | **E9** | **E10** | **E11** | **E12** | **E13** | **E14** | **E15** | **E16** |
|---|---|---|---|---|---|---|---|---|---|---|
| 1 | 581SAN | 63.6 | 57.2 | 44.4 | 57.2 | 44.4 | 49.8 | 55.3 | 51.0 | 42.5 |
| 2 | HRG | 35.7 | 32.1 | 24.9 | 32.1 | 24.9 | 28.0 | 31 | 28.6 | 23.8 |
| 3 | Talc | | 10 | 30 | 10 | 30 | 20 | 10 | 16.7 | 30 |
| 4 | SAS | | | | | | 1.5 | 3.0 | 3.0 | 3.0 |
| 5 | EBS | 0.4 | 0.4 | 0.4 | 0.4 | 0.4 | 0.4 | 0.4 | 0.4 | 0.4 |
| 6 | CB | 0.3 | 0.3 | 0.3 | 0.3 | 0.3 | 0.3 | 0.3 | 0.3 | 0.3 |

**Table 5. Selected properties of experimental blends using 581SAN and ABS**

| **Properties** | **Method** | **Unit** | **B** | **E9** | **E10** | **E11** | **E12** | **E13** | **E14** | **E15** | **E16** |
|---|---|---|---|---|---|---|---|---|---|---|---|
| MVR, 260°C/5kg/360s | ASTM D1238 | cm³/10min | 49 | 44 | 18 | 44 | 15 | 36 | 49 | 38 | 22 |
| Tensile Modulus | ASTM D638 | GPa | 2.2 | 3.0 | 5.7 | 3.0 | 5.9 | 4.2 | 3.0 | 3.8 | 5.6 |
| CLTE, flow | SABIC Internal | 10⁻⁶ 1/°C | 86 | 66 | 33 | 63 | 33 | 48 | 63 | 54 | 35 |
| 60° gloss | ASTM D523 | | 96 | 94 | 38 | 93 | 40 | 75 | 96 | 84 | 70 |
| L* | | | 27 | 28 | 28 | 28 | 28 | 28 | 31 | 29 | 30 |
| HDT | ASTM D648 | °C | 80 | 84 | 92 | 84 | 92 | 88 | 84 | 87 | 91 |
| IZOD Impact, notched | ASTM D256 | J/m | 138 | 33 | 13 | 32 | 14 | 21 | 29 | 23 | 11 |

**Table 6. Optimized formulations using 581SAN and ABS**

| # | **Item** | **Unit** | **E17** | **E18** |
|---|---|---|---|---|
| 1 | 581SAN | % | 54.0 | 50.8 |
| 2 | HRG | % | 30.3 | 28.5 |
| 3 | talc | % | 15 | 20 |
| 4 | EBS | % | 0.4 | 0.4 |
| 5 | CB | % | 0.3 | 0.3 |

**Table 7. Certain properties of disclosed formulas E17 and E18, compared with unfilled ABS (formula B) and PC/ABS (formula C)**

| **Properties** | **Method** | **Unit** | **B** | **C** | **E17** | **E18** |
|---|---|---|---|---|---|---|
| MVR, 260°C/5kg/360s | ASTM D1238 | cm³/10min | 49 | 10 | 40 | 31 |
| Tensile Modulus | ASTM D638 | GPa | 2.2 | 4.3 | 3.6 | 4.2 |
| CLTE, flow | SABIC Internal | 10⁻⁶ 1/°C | 86 | 46 | 57 | 50 |
| 60° gloss | ASTM D523 | | 96 | 38 | 77 | 68 |
| L* | | | 27 | 29 | 28 | 28 |
| HDT | ASTM D648 | °C | 80 | 120 | 86 | 88 |
| IZOD Impact, notched, 23°C | ASTM D256 | J/m | 138 | 15 (kJ/m²) | 26 | 21 |

## Claims

1. A composition, comprising:
(a) from 50 to 65 wt% of styrene-acrylonitrile (SAN) copolymer;
(b) from 3 to 33 wt% of styrene-acrylonitrile - acrylonitrile-butadiene-styrene (SAN-ABS) graft copolymer;
(c) from 2 to 30 wt% talc; and
(d) one or more modifiers,
wherein a wt% is calculated on the basis of the total weight of (a), (b), (c), and (d), and wherein the combined weight percent value of all components does not exceed 100 wt%.

2. The composition of claim 1, wherein the SAN-ABS has from 10 to 20 wt% rubber content.

3. The composition of claim 1, wherein the SAN-ABS comprises an amount of acrylic.

4. The composition of claim 1, wherein the talc further comprises an amount of a surface active agent.

5. The composition of claim 1, wherein a modifier comprises a wax.

6. The composition of claim 1, further comprising an amount of a perfluropolymer.

7. The composition of claim 1, wherein a modifier comprises a reinforcement, a polymer, a colorant, or any combination thereof.

8. The composition of claim 7, wherein the polymer comprises a thermoplastic, a thermoset, or both.

9. The composition of claim 7, wherein a colorant comprises carbon black, titanium dioxide, a dye, an organic pigment, an inorganic pigment, or any combination thereof.

10. The composition of claim 7, wherein a reinforcement comprises carbon fiber, glass fiber, graphite, mica, clay and other mineral fillers.

11. The composition of any of claims 1-7, wherein the composition has a tensile modulus of from 2 to 7 GPa, per the ASTM D638 standard.

12. The composition of any of claims 1-7, wherein the composition has a melt volume rate of from 10 to 50 cm³/10 min, per the ASTM D1238 standard.

13. The composition of any of claims 1-7, wherein the composition has a coefficient of linear expansion (CLTE) of from 20 to 70 x 10⁻⁶l/deg. C.

14. The composition of any of claims 1-7, wherein the composition has a L* in the range of from 28 to 30.

15. The composition of any of claims 1-7, wherein the composition has a HDT in the range of from 60 to 100 deg. C.

16. The composition of claim 1, wherein the composition has an Izod impact (notched, 23 deg. C, per ASTM D256) in the range of 5 to 35 J/m.

17. The composition of any of claims 1-7 or 16, wherein the composition has a 60 deg. gloss (per ASTM D523) of from 50 to 100.

18. An article that comprises the composition of any of claims 1-7, 16 or 17.

19. A composition, comprising:
(a) from 55 to 60 wt% of styrene-acrylonitrile (SAN) copolymer;
(b) from 15 to 33 wt% of styrene-acrylonitrile - acrylonitrile-butadiene-styrene (SAN-ABS) graft copolymer;
(c) from 5 to 1 wt% talc; and
(d) one or more modifiers,
wherein a wt% is calculated on the basis of the total weight of (a), (b), (c), and (d), and wherein the combined weight percent value of all components does not exceed 100 wt%.

## Patentansprüche

1. Zusammensetzung umfassend:
(a) von 50 bis 65 Gew.-% Styrol-Acrylnitril(SAN)-Copolymer
(b) von 3 bis 33 Gew.-% Styrol-Acrylnitril -Acrylnitril-Butadien-Styrol(SAN-ABS)-PfropfCopolymer
(c) von 2 bis 30 Gew.-% Talkum und
(d) einen oder mehrere Modifizierer,
wobei ein Gew.-% auf der Basis des Gesamtgewichts von (a), (b), (c) und (d) berechnet ist, und wobei der kombinierte Gewichtsprozentwert aller Komponenten 100 Gew.-% nicht überschreitet.

2. Zusammensetzung nach Anspruch 1, wobei das SAN-ABS einen Gummigehalt von 10 bis 20 Gew.-% hat.

3. Die Zusammensetzung nach Anspruch 1, wobei SAN-ABS eine Menge an Acryl umfasst.

4. Zusammensetzung nach Anspruch 1, wobei das Talkum ferner eine Menge an einem oberflächenaktiven Mittel umfasst.

5. Zusammensetzung nach Anspruch 1, wobei ein Modifizierer ein Wachs umfasst.

6. Zusammensetzung nach Anspruch 1, ferner umfassend eine Menge eines Perfluorpolymers.

7. Zusammensetzung nach Anspruch 1, wobei ein Modifizierer ein Versteifungsmittel, ein Polymer, einen Farbstoff oder irgendeine Kombination davon umfasst.

8. Zusammensetzung nach Anspruch 7, wobei das Polymer einen Thermoplasten, einen Duroplasten oder beide umfasst.

9. Zusammensetzung nach Anspruch 7, wobei ein Farbstoff Ruß, Titandioxid, einen Farbstoff, ein organisches Pigment, ein anorganisches Pigment oder irgendeine Kombination davon umfasst.

10. Zusammensetzung nach Anspruch 7, wobei ein Versteifungsmittel Carbonfaser, Glasfaser, Grafit, Mika, Ton und andere Mineralfüllstoffe umfasst.

11. Zusammensetzung nach einem der Ansprüche 1-7, wobei die Zusammensetzung ein Zugmodul von 2 bis 7 GPa nach dem ASTM D638-Standard aufweist.

12. Zusammensetzung nach einem der Ansprüche 1-7, wobei die Zusammensetzung eine Schmelzvolumenrate von 10 bis 50 cm³/10 min nach dem ASTM D1238-Standard aufweist.

13. Zusammensetzung nach einem der Ansprüche 1-7, wobei die Zusammensetzung einen Längenausdehnungskoeffizienten (CLTE) von 20 bis 70 x 10⁻⁶l/Grd. C aufweist.

14. Zusammensetzung nach einem der Ansprüche 1-7, wobei die Zusammensetzung eine L* im Bereich von 28 bis 30 aufweist.

15. Zusammensetzung nach einem der Ansprüche 1-7, wobei die Zusammensetzung eine HDT im Bereich von 60 bis 100 Grd. C aufweist.

16. Zusammensetzung nach Anspruch 1, wobei die Zusammensetzung eine Izod-Schlagzähigkeit (gekerbt, 23 Grd. C nach ASTM D256) von 5 bis 35 J/m aufweist.

17. Zusammensetzung nach einem der Ansprüche 1-7 oder 16, wobei die Zusammensetzung eine 60 Grd. Glanzeinheit (Gloss) (nach ASTM D523) von 50 bis 100 aufweist.

18. Gegenstand, der die Zusammensetzung nach einem der Ansprüche 1-7, 16 oder 17 umfasst.

19. Zusammensetzung umfassend:
(a) von 55 bis 60 Gew.-% Styrol-Acrylnitril(SAN)-Copolymer
(b) von 15 bis 33 Gew.-% Styrol-Acrylnitril - Acrylnitril-Butadien-Styrol(SAN-ABS)-PfropfCopolymer
(c) von 5 bis 1 Gew.% Talkum, und
(d) einen oder mehrere Modifizierer,
wobei ein Gew.-% auf der Basis des Gesamtgewichts von (a), (b), (c) und (d) berechnet ist, und wobei der kombinierte Gewichtsprozentwert aller Komponenten 100 Gew.-% nicht überschreitet.

## Revendications

1. Composition, comprenant :
(a) de 50 à 65 % en poids de copolymère de styrène-acrylonitrile (SAN) ;
(b) de 3 à 33 % en poids de copolymère greffé de styrène-acrylonitrile - acrylonitrile-butadiène-styrène (SAN-ABS) ;
(c) de 2 à 30 % en poids de talc ; et
(d) un ou plusieurs agents modifiants,
dans laquelle un % en poids est calculé d'après le poids total de (a), (b), (c) et (d), et dans laquelle la valeur du pourcentage en poids combiné de tous les composants ne dépasse pas 100 % en poids.

2. Composition selon la revendication 1, dans laquelle le SAN-ABS a une teneur en caoutchouc allant de 10 à 20 % en poids.

3. Composition selon la revendication 1, dans laquelle le SAN-ABS comprend une quantité d'acrylique.

4. Composition selon la revendication 1, dans laquelle le talc comprend en outre une quantité d'un agent tensioactif.

5. Composition selon la revendication 1, dans laquelle un agent modifiant comprend une cire.

6. Composition selon la revendication 1, comprenant en outre une quantité de perfluoropolymère.

7. Composition selon la revendication 1, dans laquelle un agent modifiant comprend un renfort, un polymère, un colorant ou une quelconque combinaison de ceux-ci.

8. Composition selon la revendication 7, dans laquelle le polymère comprend un thermoplastique, une matière thermodurcissable ou les deux.

9. Composition selon la revendication 7, dans laquelle un colorant comprend du noir de carbone, du dioxyde de titane, une matière colorante, un pigment organique, un pigment inorganique ou une quelconque combinaison de ceux-ci.

10. Composition selon la revendication 7, dans laquelle un renfort comprend la fibre de carbone, la fibre de verre, le graphite, le mica, l'argile et d'autres charges minérales.

11. Composition selon l'une quelconque des revendications 1 à 7, laquelle composition a un module d'élasticité en traction allant de 2 à 7 GPa, conformément à la norme ASTM D638.

12. Composition selon l'une quelconque des revendications 1 à 7, laquelle composition a un indice de fluidité à chaud allant de 10 à 50 cm³/10 min, conformément à la norme ASTM D1238.

13. Composition selon l'une quelconque des revendications 1 à 7, laquelle composition a un coefficient de dilatation thermique linéaire (CLTE) allant de 20 à 70 x 10⁻⁶l/C°.

14. Composition selon l'une quelconque des revendications 1 à 7, laquelle composition a un L* dans la gamme de 28 à 30.

15. Composition selon l'une quelconque des revendications 1 à 7, laquelle composition a une HDT dans la gamme de 60 à 100 C°.

16. Composition selon la revendication 1, laquelle composition a une résistance au choc Izod (sur barreau entaillé, 23 C°, conformément à la norme ASTM D256) de 5 à 35 J/m.

17. Composition selon l'une quelconque des revendications 1 à 7 ou 16, laquelle composition a une brillance à 60 deg. (conformément à la norme ASTM D523) de 50 à 100.

18. Article comprenant la composition selon l'une quelconque des revendications 1 à 7, 16 ou 17.

19. Composition, comprenant :
(a) de 55 à 60 % en poids de copolymère de styrène-acrylonitrile (SAN) ;
(b) de 15 à 33 % en poids de copolymère greffé de styrène-acrylonitrile - acrylonitrile-butadiène-styrène (SAN-ABS) ;
(c) de 5 à 1 % en poids de talc ; et
(d) un ou plusieurs agents modifiants,
dans laquelle un % en poids est calculé d'après le poids total de (a), (b), (c) et (d), et dans laquelle la valeur du pourcentage en poids combiné de tous les composants ne dépasse pas 100 % en poids.
